# EUROPÄISCHE PATENTSCHRIFT

(11) **EP 0 665 899 B1**
(45) Veröffentlichungstag und Bekanntmachung des Hinweises auf die Patenterteilung: **11.03.1998**
(21) Anmeldenummer: 93923447.2
(22) Anmeldetag: 25.10.1993
(51) Int. Cl.: C21C 5/56, F27B 1/02, C21B 13/02, C21C 5/52

(54) **VERFAHREN UND VORRICHTUNG ZUM EINSCHMELZEN VON SCHROTT**
PROCESS AND DEVICE FOR MELTING SCRAP
PROCEDE ET DISPOSITIF POUR FONDRE DE LA FERRAILLE

(30) Priorität: 26.10.1992 DE 4236510
(43) Veröffentlichungstag der Anmeldung: 09.08.1995
(73) Patentinhaber: MANNESMANN Aktiengesellschaft, 40213 Düsseldorf (DE)
(72) Erfinder: FEUERSTACKE, Ewald, D-46282 Dorsten (DE)
(74) Vertreter: Meissner, Peter E., Dipl.-Ing.
(86) Internationale Anmeldenummer: DE9301025
(87) Internationale Veröffentlichungsnummer: WO9410348

(56) Entgegenhaltungen:
- EP-A- 0 265 531
- EP-A- 0 336 920
- DE-B- 2 342 959
- US-A- 4 001 008

## Beschreibung

Die Erfindung betrifft ein Verfahren und eine Vorrichtung zum Einschmetzen von Schrott in einem mit Gleichstrom betriebenen Herd-Schachtofen nach den Oberbegriffen der Ansprüche 1 und 3.

Die Kathoden von Gleichstromlichtbogenöfen werden üblicherweise von einem Tragarm gehalten, der an einer vertikal verfahrbaren Tragsäule befestigt ist. Nachteil dieser Bauweise von Elektrodentragvorrichtungen für Lichtbogenöfen, wie sie beispielsweise aus der Schrift DE 37 01 678 bekannt ist, ist die große freie Elektrodenlänge bei nur geringer Schachthöhe des Ofengefäßes. Je größer die Bauhöhe des Ofengefäßes wird, desto größer ist auch die Gefahr, daß Schrott gegen den freien Teil der Elektrode stürzt und es hierdurch zu Elektrodenbrüchen sowie zu Kurzschlüssen kommt mit der negativen Folge einer Unterbrechung der Leistungsübertragung.

Darüber hinaus werden diese öfen regelmäßig diskontinuierlich beschickt, wobei es durch das Öffnen des Deckels und das Wegfahren der Elektroden zu Betriebsunterbrechungen kommt. Die Folge hiervon ist nicht nur eine Minderung der Produktion, sondern auch eine Erhöhung des Verschleisses der Ofenelemente einschließlich der Feuerfestauskleidung wie auch der ins Ofengefäß ragenden Kathode.

Aus der Schrift DE-PS 22 10 468 ist ein Verfahren zum kontinuierlichen Herstellen von Stahl in einem Schachtofen bekannt, bei dem im Boden eine zentrisch angeordnete, in das Ofengefäß hinausragende Elektrode vorgesehen ist, mit der das über ihr angeordnete Einsatzmaterial durch einen Lichtbogen aufgeschmolzen wird. Ein Schachtofen dieser Bauart, der zum Einschmelzen von Erz, Pellets und Sinter vorgesehen ist, ist für das Einschmelzen von Schrott kaum geeignet. Zum einen wird sich die erforderliche Leistung nicht in die Beschickung einbringen lassen, zum anderen birgt die von einem Spalt umgebene Bodenelektrode zu hohe Risiken bei den beim Schrottschmelzen ublichen Schmelzbadhöhen.

Weiterhin ist aus der Schrift EP 0 336 920 D1 ein Verfahren zum Chargieren von u.a. Schrott in einem Schmelz- oder Schmelzreduktionsofen bekannt, bei dem die Charge vor dem Einbringen in den Ofen vorgewärmt wird un unter Verwendung eines elektromagnetischen Feldes bis zum Erreichen einer vorbestimmten Temperatur gehalten wird. Hierbei wird die Charge der Strahlungswärme und der Prozeßwärme unmittelbar ausgesetzt, u.z. so weit, bis beispielsweise der Schrott seine ferromagnetischen Eigenschaften (Curie-Punkt) verliert und nicht mehr vom elektromagnetischen Feld gehalten werden kann.

Dieser für ein kontinuierliches Verfahren konzipierte Schmelzofen läßt ein beliebiges Zurückhalten der Schrottsäule im Ofenschacht nicht zu.

Die Erfindung geht aus von einer Vorrichtung zur kontinuierlichen Erzeugung von Stahl aus Erz gemäß der DE-A-23 42 959.

Die Erfindung hat sich das Ziel gesetzt, einen gattungsgemäßen Lichtbogenofen zu schaffen, der mit konstruktiv einfachen Mitteln einen weitgehend kontinuierlichen Betrieb ermöglicht, und bei dem die zum Einschmelzen erforderliche Energie soweit wie möglich ausnutzbar und in dem eine von der Schachthöhe unabhängige wartungsarme Kathode einsetzbar ist.

Die Erfindung erreicht dieses Ziel durch die kennzeichnenden Merkmale des verfahrensanspruchs 1 und des Vorrichtungsanspruches 3.

Erfindungsgemäß wird vorgeschlagen, die Schrottsäule in Form einer Hülse auszubilden und dabei den Schrott in einen ebenen Querschnitt senkrecht im Schacht absinken zu lassen, vor Erreichen der Schmelzzone den freien inneren Raum der aus absinkendem Schrott gebildeten Hülse zu verkleinern und den inneren Hohlraum der Schrotthülse dem zwischen einer Kathode und einer Anode brennenden Lichtbogen auszusetzen.

Um das völlig gleichmäßige Absinken des Schrotts zu ermöglichen, wird ein Ofengefäß vorgeschlagen, in dessen Zentrum die Elektrode in einen Rohr untergebracht ist. Der kontinuierlich chargierbare Schrott weist in einer Schnittebene rechtwicklig zur Gefäßmittenachse eine ringförmige Fläche auf. Trotz des zentrisch brennenden Lichtbogens kommt es innerhalb der Ringflächen während des Absinkens des Schrottes nicht zu schiefen Schüttungen, so daß die Einzelquerschnitte gleichmäßig eben verbleiben.

Innerhalb des Rohres wird die Halterung der Elektrode in der Weise vorgesehen, daß ein kurzes freies Elektrodenende verbleibt sowie gleichzeitig die Halterung in geschützter Lage angeordnet, wodurch die Elektrode insbesondere der Strahlungswärme des Lichtbogens und der Schmelze nicht ausgesetzt ist. Dieses brucharme Elektrodenende ist dabei unabhängig von der Schachthöhe.

Der Kopf des vorgeschlagenen Schachtofens ist bis auf eine Abdeckelung völlig frei, so daß dort ungehindert von beliebigen Seiten aus chargiert werden kann. Hierdurch wird es möglich, an beliebigen Stellen der Schrottsäule nachzuchargieren und somit eine völlig ebene Schrottsäule zu bilden.

In vorteilhafter Weise können zusätzlich zu der elektrischen Schmelzenergie Brenner für gas- und/oder staubförmige Medien eingesetzt werden.

Die den Ofen verlassenden Rauchgase werden noch im Bereich der Schrottsäule durch einen ringförmig angeordneten Rauchgaskanal aufgesaugt und einer Gasreinigung zugeführt.

Weiterhin ist eine Vorrichtung zur Unterbrechung des Abströmens der Schrottsäule vorgesehen, so daß die erforderliche Schlackearbeit ohne ständiges Nachrutschen des Schrottes mit der Folge weiteren metallischen einschmelzens erfolgt.

Diese Anhaltevorrichtung ist in einer vorteilhaften Ausgestaltung in Form eines Magneten ausgebildet. Dieser Magnet ist sowohl am Außenmantel des Schachtes angebracht wie auch in dem inneren freien Raum des Rohres. Durch diese Anordnung läßt sich ein Maximum von magnetischer Haltekraft ausbilden, wobei die zu überwindende freie Fläche zwischen beiden Magneten durch die hülsenförmige Ausgestaltung der Schrottsäule zu bekannt gewordenen Ofenbauformen relativ klein ist.

In einer anderen Ausgestaltungsform besteht die Anhaltevorrichtung aus einfachen mechanischen Elementen, die dreh- oder axialbeweglich sind und den Durchtrittsquerschnitt verkleinern. Diese mechanischen Halteelemente in Form von Stäben oder Platten sind durch einfache Antriebe in den Schachtraum des Ofens einbringbar bzw. im Schacht selbst relativ zur Wand hin- und herbewegbar. Einen wesentlichen Teil ihrer Haltearbeit werden die mechanischen Elemente durch Klemmen einzelner Schrotteile gegeneinander erreichen.

Zur Minderung der Verluste der elektrischen Energie wird die Stromzuführung durch einen Verbindungskanal zwischen der Rohrwandung und der Schachtwandung erreicht. Durch die nur geringen vertikalen Veränderungen der Elektrode kann der Längenausgleich der Stromrohre durch eine einfache kreisförmige Führung erreicht werden. Die Anklemmung der Stromzuführung an die Elektrode wird in geschützter Lage von der Elektrodenspitze entfernt vorgenommen.

Die Elektrode wird auf Hubzylindern abgestützt. Da kein Schrott gegen die Elektrode stürzen kann, kommt es auch nicht zur Kurzschlüssen mit der Folge, daß bei dem erfindngsgemäßen Ofen relativ langsame kurzhubige Hydraulikbausteine zum Einsatz kommen können.

Ein Beispiel der Erfindung ist in der beiliegenden Zeichnung dargelegt. Dabei zeigen:
- Fig. 1: einen Schnitt durch das Ofengefäß,
- Fig. 2: eine Draufsicht.

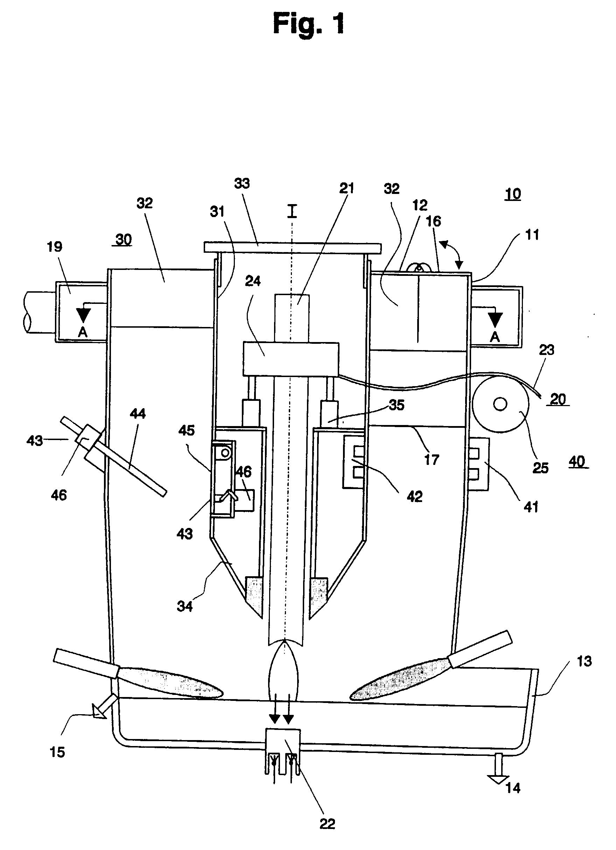

In der Figur 1 ist ein Schachtofen (10) schematisch dargestellt mit einem Schacht (11), der durch einen Deckel (12) verschließbar ist. Am Deckel (12) sind Klappen (16) vorgesehen, die zum Beschicken des Ofens geöffnet werden.

Im Untergefäß (13) des Schachtofens (10) befindet sich eine Abstichöffnung (14) für Metall und eine Abstichöffnung (15) für Schlacke. Im Oben des Untergefäßes (13) eine Anode (22) angeordnet.

Im Zentrum des Schachtofens (10) ist eine Elektrodentragvorrichtung (30) vorgesehen, die ein Rohr (31) aufweist, welches über Tragarme (32) sich am Schacht (11) des Schachtofens (10) abstützt. Fußendig ist das Rohr (31) mit einem Deckel (33) verschlossen. Am Kopfende des Rohres (31) ist eine zum Untergefäß (13) weisende konische Verjüngung vorgesehen.
Im Innenraum des Rohres (31) sind Abstützelemente (35) vorgesehen, auf denen sich Klemmbacken (24) abstützen.

Mit diesen Klemmbacken (24) wird eine im Inneren des Rohres (31) angeordnete und aus diesem kopfendig herausragende Kathode klemmend gehalten. Die zu einer Gleichstromeinrichtung (20) gehörende Kathode (21) wird über Zuleitungen (23) mit elektrischer Energie versorgt. Die Zuleitung (23) wird dabei über eine Umlenkrolle (25) geführt.

Im Bereich der halben Höhe des Schachtes (11) ist eine Vorrichtung (40) zum Anhalten des in den Schacht füllbaren Schrottes vorgesehen. Im rechten Teil des Schachtes (11) ist diese Anhaltevorrichtung (40) in Form eines Außenmagneten (41) und eines Innenmagneten (42) ausgeführt. Auf der linken Schachtseite ist diese Anhaltevorrichtung (40⁾ in Form mechanischer Einrichtungen (43) ausgeführt, die jeweils durch Antriebe (46) bewegbare Stangen (44) bzw. Platten (45)aufweisen. Am Kopf des Schachtofens ist ein den Schacht (11) umgreifender Rauchgaskanal (19) vorgesehen, der mit einer nicht weiter dargestellten Abgasreinigung in Verbindung steht.
Unterhalb des Rauchgaskanales (19) im Inneren des Schachtes (11) ist zwischen dem Rohr (31) und der Wandung des Schachtes (11) eine Verbindungsleitung (17) vorgesehen, durch die die Energieversorgungen für die Abstützelemente (35), die Klemmbacken (24) sowie die Stromversorgung für die Kathode (21) führbar sind.

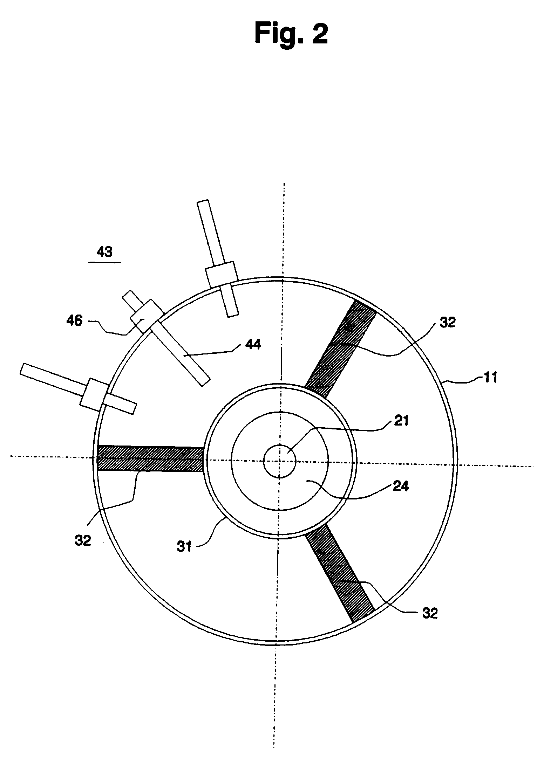

In der Figur 2 ist eine Draufsicht des Schachtes (11) <Schnitt AA> dargestellt. Im Zentrum des 5chachtes (11) ist die Kathode (21) angeordnet, die durch die Klemmbacken (24) gehalten wird. Im Schnitt dargestellt sind drei Tragarme (32), die einenends am Rohr (31) und anderenends am 5chacht (11) befestigt sind.

Von den vorgeschlagenen Anhaltevorrichtungen (40) ist in der Figur 2 ausschließlich die mechanische Einrichtung (43) in Form von durch Antriebe (46) achsial verstellbare Stangen (44) dargestellt.

### Positionsliste

- 10: Schachtofen
- 11: Schacht
- 12: Deckel
- 13: Untergefäß
- 14: Abstichöffnung Metall
- 15: Abstichöffnung Schlacke
- 16: Klappe
- 17: Verbindungsleitung
- 19: Rauchgaskanal
- 20: Gleichstromeinrichtung
- 21: Kathode
- 22: Anode
- 23: Zuleitung
- 24: Klemmbacken
- 25: Umlenkrolle
- 30: Elektrodentragvorrichtung
- 31: Rohr
- 32: Tragarm
- 33: Deckel
- 34: konische Verjüngung
- 35: Abstützelemente
- 40: Anhaltevorrichtung
- 41: Magnet außen
- 42: Magnet innen
- 43: mechanische Einrichtung
- 44: Stange
- 45: Platte
- 46: Antrieb
- I: Gefäßmittenachse

## Patentansprüche

1. Verfahren zum Einschmelzen von Schrott in einem mit Gleichstrom betriebenen geschlossenen Herd-Schachtofen (10), bei dem der Schrott am Ofenkopf ringflächenförmig zugeführt und, bevor der Schrott die Schmelzzone erreicht, die innere, von Schrott freie Fläche des ringförmigen ebenen Querschnitts verringert und in der Schmelzzone im Zentrum des ebenen Querschnitts dem zwischen einer Kathode und einer Anode brennenden Lichtbogen ausgesetzt wird und bei dem die durch den Lichtbogen in der Schmelzzone erschmolzenen Produkte im Bereich des Gefäßbodens abgestochen werden,
gekennzeichnet durch folgende Merkmale:
a) dem absinkenden Schrott entgegenströmende Heizgase werdern innerhalb der Schrottaufgabe von der zylindrischen Außenwand der Schrottsäule abgesaugt und
b) das Absinken des Schrotts wird in Höhe der halben Länge der Schrottsäule in dem dem Ofenkopf zugewandten Teil des Herd-Schachtofens (10) während der Schlackearbeit unterbrochen.

2. Verfahren nach Anspruch 1,
dadurch gekennzeichnet,
daß der Schrott in der Schmelzzone zusätzlich zu dem Lichtbogen am Außenrand des ebenen Querschnitts flammengeschmolzen wird.

3. Gleichstrom betriebener geschlossener Herd-Schachtofen (10) mit einer in ein Untergefäß (13) hineinragenden Kathode (21) die von einer Elektrodentragvorrichtung (30) gehalten wird, die als konzentrisch zur Gefäßmittenachse (1) angeordnetes Rohr (31) ausgebildet ist, mit einer im Gefäßboden vorgesehenen Anode (22), einer am Ofenkopf angeschlossenen Einrichtung (19) zum Absaugen des Rauchgases sowie Abstichöffnungen für Schlacke und/oder metallischer Schmelze (14,15) zur Durchführung des Verfahrens nach einem der Ansprüche 1 und 2,
dadurch gekennzeichnet,
daß das Rohr (31) zum Fuß des Schachtofens hin eine konische Verjüngung (34) aufweist,
daß das Rohr (31) sich am Kopf des Schachtofens (10) über Tragarme (32) am Schacht (11) abstützt,
daß am Kopf des Schachtofens (10) den Schacht (11) umgreifend, ein Rauchgaskanal (19) vorgesehen ist und
daß im Bereich der halben Höhe des Schachtes (11) eine Vorrichtung (40) vorgesehen ist, mit der absinkender Schrott anhaltbar ist.

4. Gleichstrom betriebener geschlossener Herd-Schachtofen (10) mit einer in ein Untergefäß (13) hineinragenden Kathode (21) nach Anspruch 3,
dadurch gekennzeichnet,
daß im Rohr (31) Abstützelemente (35) für die Kathode (21) vorgesehen sind, die eine Lageänderung der Kathode (21) in längsaxialer Richtung (I) ermöglichen.

5. Gleichstrom betriebener geschlossener Herd-Schachtofen (10) mit einer in ein Untergefäß (13) hineinragenden Kathode (21) nach Anspruch 4,
dadurch gekennezeichnet,
daß die Abstützelemente (35) mindestens drei mit flammsicherer Hydraulikflüsigkeit betriebene Stellzylinder sind.

6. Gleichstrom betriebener geschlossener Herd-Schachtofen (10) mit einer in ein Untergefäß (13) hineinragenden Kathode (21) nach Anspruch 1,
dadurch gekennzeichnet,
daß die Anhaltevorrichtung (40) ein mindestens aus zwei Teilen bestehender in einer Schnittebene im Schacht (11) befindlicher Magnet (41,42) ist, dessen einer Teil (41) an der Außenwand des Schachtofens (10) den Schacht umgreifend und dessen anderer Teil (42) an der Innenwand des Rohres (31) angeordnet ist.

7. Gleichstrom betriebener geschlossener Herd-Schachtofen (10) mit einer in ein Untergefäß (13) hineinragenden Kathode (21) nach Anspruch 3,
dadurch gekennzeichnet,
daß die Anhaltevorrichtung (40) eine mechanische Einrichtung (43) ist, die Stangen (44) oder Platten (45) aufweist, welche in das Innere des Schachtes (11) bewegbar sind.

8. Gleichstrom betriebener geschlossener Herd-Schachtofen (10) mit einer in ein Untergefäß (13) hineinragenden Kathode (21) nach Anspruch 7,
dadurch gekennzeichnet,
daß die Stangen (44) oder die Platten (45) axial beweglich am Schacht (11) befestigt sind und durch außerhalb des Schrottstromes angeordnete Antriebe (46) in die Schrottdurchtrittsfläche hineinführbar sind.

9. Gleichstrom betriebener geschlossener Herd-Schachtofen (10) mit einer in ein Untergefäß (13) hineinragenden Kathode (21) nach Anspruch 7,
dadurch gekennzeichnet,
daß die Stangen (44) oder Platten (45) drehbeweglich am Schacht (11) und/oder Rohr (31) befestigt und gegen die im Schacht befindliche Schrottsäule preßbar sind.

10. Gleichstrom betriebener geschlossener Herd-Schachtofen (10) mit einer in ein Untergefäß (13) hineinragenden Kathode (21) nach Anspruch 1,
dadurch gekennzeichnet,
daß zwischen dem Rohr (31) und der Wand des Schachtes (11) eine Verbindungsleitung (17) vorgesehen ist, durch die eine elektrische Zuleitung (23) und Zuführeinrichtungen zur Energieversorgung der Stützelemente (35) sowie der Antriebe (46) führbar sind.

## Claims

1. A method for melting scrap in a closed hearth-type blast furnace (10) operated using direct current, in which the scrap is supplied in a ring area at the top of the furnace and, before the scrap reaches the melting zone, the inner surface of the annular flat cross-section which is free of scrap is reduced and in the melting zone in the centre of the flat cross-section is exposed to the arc which burns between a cathode and an anode, and in which the products melted by the arc in the melting zone are tapped off in the region of the bottom of the vessel, characterised by the following features:
a) hot gases flowing counter to the falling scrap are drawn off within the scrap charge zone from the cylindrical outer wall of the scrap column, and
b) the fall of the scrap is interrupted at the height of half the length of the scrap column in the part of the hearth-type blast furnace (10) facing the top of the furnace during the slag work.

2. A method according to Claim 1, characterised in that the scrap in the melting zone in addition to the arc is flame-melted at the outer edge of the flat cross-section.

3. A direct-current-operated closed hearth-type blast furnace (10) having a cathode (21) projecting into a lower vessel (13), which cathode is held by an electrode supporting device (30) which is designed as a tube (31) arranged concentrically to the centre axis (I) of the vessel, with a anode (22) provided in the base of the vessel, a means (19) connected to the top of the furnace for drawing off the flue gas and also tapholes for slag and/or metallic melt (14, 15), for performing the method according to one of Claims 1 and 2,
characterised in that the tube (31) has a conical taper (34) towards the base of the blast furnace,
that the tube (31) is supported on the shaft (11) at the top of the blast furnace (10) by means of supporting arms (32),
that a flue gas duct (19) is provided at the top of the blast furnace (10), surrounding the shaft (11), and
that a means (40) is provided in the region of half the height of the shaft (11) by means of which falling scrap can be halted.

4. A direct-current-operated closed hearth-type blast furnace (10) having a cathode (21) projecting into a lower vessel (13) according to Claim 3, characterised in that supporting elements (35) for the cathode (21) are provided in the tube (31) which permit a change of position of the cathode (21) in the longitudinally axial direction (I).

5. A direct-current-operated closed hearth-type blast furnace (10) having a cathode (21) projecting into a lower vessel (13) according to Claim 4, characterised in that the supporting elements (35) are at least three actuating cylinders operated with fireproof hydraulic fluid.

6. A direct-current-operated closed hearth-type blast furnace (10) having a cathode (21) projecting into a lower vessel (13) according to Claim 1, characterised in that the halting means (40) is a magnet (41, 42) consisting of at least two parts and located in a sectional plane in the shaft (11), one part (41) of which magnet is located on the outer wall of the blast furnace (10), surrounding the shaft, and the other part (42) of which is arranged on the inner wall of the tube (31).

7. A direct-current-operated closed hearth-type blast furnace (10) having a cathode (21) projecting into a lower vessel (13) according to Claim 3, characterised in that the halting means (40) is a mechanical means (43) which has rods (44) or plates (45) which can be moved into the interior of the shaft (11).

8. A direct-current-operated closed hearth-type blast furnace (10) having a cathode (21) projecting into a lower vessel (13) according to Claim 7, characterised in that the rods (44) or the plates (45) are fastened to the shaft (11) so as to be axially movable, and can be introduced into the scrap passage area by drive means (46) located outside the stream of scrap.

9. A direct-current-operated closed hearth-type blast furnace (10) having a cathode (21) projecting into a lower vessel (13) according to Claim 7, characterised in that the rods (44) or plates (45) are fastened to the shaft (11) and/or tube (31) so as to be rotationally movable, and can be pressed against the scrap column located in the shaft.

10. A direct-current-operated closed hearth-type blast furnace (10) having a cathode (21) projecting into a lower vessel (13) according to Claim 1, characterised in that between the tube (31) and the wall of the shaft (11) there is provided a connecting line (17) through which an electric supply line (23) and supply means for supplying energy to the supporting elements (35) and the drives (46) can be guided.

## Revendications

1. Procédé pour fondre de la ferraille dans un four à cuve à creuset (10) fermé et alimenté en courant continu, dans lequel la ferraille est amenée à la tête du four sous forme de surface annulaire, et avant que la ferraille n'atteigne la zone de fusion, la face interne et libre de ferraille de la section transversale, plane et annulaire est réduite, et la ferraille est soumise, dans la zone de fusion, au centre de la section transversale plane, à l'arc électrique brûlant entre une cathode et une anode, et dans lequel les produits fondus dans la zone de fusion par l'arc électrique sont soutirés dans la zone du fond du récipient,
caractérisé par les caractéristiques suivantes :
a) des gaz chauds s'écoulant en sens contraire à la ferraille qui s'affaisse sont aspirés à l'intérieur de l'alimentation en ferraille par la paroi externe cylindrique de la colonne de ferraille et
b) l'affaissement de la ferraille est interrompue à hauteur de la moitié de longueur de la colonne de ferraille, dans la partie du four à cuve à creuset (10), en regard de la tête du four, durant le travail des scories.

2. Procédé selon la revendication 1,
caractérisé en ce que la ferraille dans la zone de fusion est fondue par flamme, en plus de l'arc électrique, au bord externe de la section transversale plane.

3. Four à cuve à creuset (10) fermé, alimenté en courant continu et comportant une cathode (21) qui fait saillie dans un récipient inférieur (13) et qui est maintenue par un dispositif porteur d'électrode (30) réalisé sous forme d'un tube (31) agencé de façon concentrique à l'axe central de récipient (I), une anode (22) prévue dans le fond du récipient, un dispositif (19) raccordé à la tête du four pour aspirer le gaz de combustion, ainsi que des ouvertures de soutirage pour des scories et/ou de la fonte métallique (14,15), pour la mise en oeuvre du procédé selon l'une des revendications 1 et 2,
caractérisé :
- en ce que le tube (31) présente vers le pied du four à cuve une réduction conique (34),
- en ce que le tube (31) prend appui à la tête du four à cuve (10) par l'intermédiaire d'un bras porteur (32) à la cuve (11),
- en ce qu'un canal à gaz de combustion (19) est prévu à la tête du four à cuve (10) en entourant la cuve (11), et
- en ce qu'un dispositif (40), par lequel la ferraille s'affaissant peut être maintenue, est prévu dans la zone de la moitié de hauteur de la cuve (11).

4. Four à cuve à creuset (10) fermé, alimenté en courant continu et comportant une cathode (21) faisant saillie dans un récipient inférieur (13) selon la revendication 3,
caractérisé en ce que l'on prévoit dans le tube (31) des éléments d'appui (35) pour la cathode (21), qui permettent une modification de la position de la cathode (21) en direction axiale longitudinale (I).

5. Four à cuve à creuset (10) fermé, alimenté en courant continu et comportant une cathode (21) faisant saillie dans un récipient inférieur (13) selon la revendication 4,
caractérisé en ce que les éléments d'appui (35) sont au moins trois cylindres de réglage entraînés par des liquides hydrauliques résistant aux flammes.

6. Four à cuve à creuset (10) fermé, alimenté en courant continu et comportant une cathode (21) faisant saillie dans un récipient inférieur (13) selon la revendication 1,
caractérisé en ce que le dispositif de maintien (40) est un aimant (41,42) constitué d'au moins deux parties et situé dans un plan de coupe dans la cuve (11), dont l'une des parties (41) est agencée sur la paroi externe du four à cuve (10) entourant la cuve et dont l'autre partie (42) est agencée sur la paroi interne du tube (31).

7. Four à cuve à creuset (10) fermé, alimenté en courant continu et comportant une cathode (21) faisant saillie dans un récipient inférieur (13) selon la revendication 3,
caractérisé en ce que le dispositif de maintien (40) est un dispositif mécanique (43) qui comporte des barres (44) ou des plaques (45) qui peuvent être déplacées à l'intérieur de la cuve (11).

8. Four à cuve à creuset (10) fermé, alimenté en courant continu et comportant une cathode (21) faisant saillie dans une récipient inférieur (13) selon la revendication 7,
caractérisé en ce que les barres (44) ou les plaques (45) sont fixées sur la cuve (11) de façon à pouvoir être déplacées axialement et peuvent être introduites dans la face de passage de ferraille par des éléments d'entraînement (46) agencés à l'extérieur du courant de ferraille.

9. Four à cuve à creuset (10) fermé, alimenté en courant continu et comportant une cathode (21) faisant saillie dans un récipient inférieur (13) selon la revendication 7,
caractérisé en ce que les barres (44) et les plaques (45) sont fixées sur la cuve (11) et/ou le tube (31), de façon à pouvoir tourner, et peuvent être pressées contre la colonne de ferraille se trouvant dans la cuve.

10. Four à cuve à creuset (10) fermé, alimenté en courant continu et comportant une cathode (21) faisant saillie dans un récipient inférieur (13) selon la revendication 4,
caractérisé en ce que l'on prévoit une conduite (17) entre le tube (31) et la paroi de la cuve (11), par laquelle peuvent être amenés une liaison électrique (23) et des dispositifs d'amenée pour l'alimentation en énergie des éléments d'appui (35), ainsi que des éléments d'entraînement (46).
